# EUROPEAN PATENT APPLICATION

(11) **EP 1 110 758 A2**
(43) Date of publication of application: **27.06.2001**
(21) Application number: 00204765.2
(22) Date of filing: 22.12.2000
(51) Int. Cl.: B60C 5/00, B60C 3/04

(54) **Tire with large bead diameter**

(30) Priority: 22.12.1999 US 171704 P
(71) Applicant: FBT Enterprices, Inc., Rome, Georgia 30162-5811 (US)
(72) Inventor: Taylor, Fredrick, Rome, Georgia 30161 (US)
(74) Representative: Iemenschot, Johannes Andreas, Ir.

(57) **Abstract**

A pneumatic tire primarily for, but not limited to, off-the-road vehicles, the tire having an inner diameter to outer diameter ratio of between 0.55 - 0.70.

## Description

The present invention relates generally to tires with shorter sidewalls than conventional tires regardless of section width, and more specifically to high bead ratio pneumatic tires for off-the-road applications.

Numerous pneumatic tire designs are known. Many tires incorporate sidewalls of greater than 2.5 inches. The tire sidewall, also commonly referred to as section height, is defined as the area of the tire between the bead seat and the outside diameter. The practice of ever increasing section heights primarily has been developed by the tire industry to enable the tire to act as a part of the vehicle's shock absorption system. Yet, there are numerous disadvantages to such increased sidewall heights. Several inherent, yet undesirable, characteristics with increased section heights include, among others, sidewall instability, quick wear, poor handling, small footprint, and poor bounce performance.

Thus, it can be seen that there is a need for the present invention, an improvement over the conventional tire, providing a shorter tire sidewall design incorporating several beneficial characteristics including improved sidewall stability, better vehicle handling, longer wear, larger footprint, reduced bounce, and a larger wheel allowing the original equipment manufacturer (OEM) more space for hub, steering, brake, and hydraulic systems.

Additionally, the practice of flatproofing a tire by adding a fill such as urethane to a stop leak substance is common in the off-the-road industry. A high bead ratio tire like that of the present invention has less volume than the standard tire design, and therefore, reduces the amount of costly fill required to flatproof the tire.

Further, the present tire design does not significantly reduce the vehicle's shock absorbency, and any such loss is more than compensated by today's improved shock absorption systems excluding the tires' contribution.

It is to the provision of such a shorter sidewall, high bead ratio tire that the present invention is primarily directed.

Briefly described, in a preferred form, the present invention provides a vehicle tire having a high bead ratio, defined herein as the ratio between the inside (bead) diameter **I**_{**D**} and the outside (tread crown) diameter **O**_{**D**} of the tire. Thus, for example, the present tire has a section height of **(O**_{**D**}**-I**_{**D**}**)/2.** It will be understood by those in the art that bead ratio is independent of either aspect ratio or tread (section) width.

Bead ratio is new to the art. It is common to identify a particular tire with reference to: the type of tire, for example, a passenger tire; the section width; the aspect ratio; the tire construction; the outside diameter; and, the load index. While all of these characteristics are indeed relevant, none specifically address section height as a function of the tire's inside and outside diameters, which the Applicant has found to be particularly meaningful when determining the qualities of a particular tire.

The most commonly used tire ratio, often referred to as the profile or "series," is the aspect ratio. The aspect ratio of a tire is determined by dividing section height by section width. Higher aspect ratios generally deliver greater deflection under load and a softer ride. Lower aspect ratios deliver a wider footprint, quicker response, less slip angle, lower flex rate, less deflection and a harsher ride.

Bead ratio provides a tire characteristic that does not depend on section width. The table below discloses the range of bead ratios for conventional tire sizes (0.47 - 0.54), and the range of bead ratios for the preferable tires of the present invention (0.55 - 0.70).

| **Tire Size Conventional** | **Bead Ratio Conventional** | **Tire Size Present Invention Tire** | **Bead Ratio Present Tire** |
|---|---|---|---|
| 26 X 12-12 | 0.47 | 26 X 12-15 | 0.58 |
| | | 26 X 12-17.5 | 0.68 |
| 31 X 1550-15 | 0.48 | 31 X 1550-17.5 | 0.56 |
| | | 31 X 1550-19.5 | 0.63 |
| 31 X 1550-16.5 | 0.50 | 31 X 1550-19.5 | 0.59 |
| | | 31 X 1550-22.5 | 0.68 |
| 10-16.5 | 0.54 | 10-19.5 | 0.64 |
| 12-16.5 | 0.50 | 12-19.5 | 0.59 |
| | | 12-22.5 | 0.69 |
| 14-17.5 | 0.48 | 14-22.5 | 0.62 |
| | | 14-24.5 | 0.67 |
| 15-19.5 | 0.49 | 15-24.5 | 0.61 |
| 18-19.5 | 0.49 | 18-24.5 | 0.61 |
| | | 18-28 | 0.70 |
| 15-22.5 | 0.52 | 15-24.5 | 0.57 |
| 18-22.5 | 0.49 | 15-28 | 0.65 |
| | | 18-28 | 0.61 |
| | | 18-26.5 | 0.57 |
| | | 18-30.5 | 0.66 |

As is evident from the above table, a tire design incorporating a bead ratio greater than .55 is novel in the tire art. A tire according to the present invention is designed for use on paved or dirt surfaces and has a pair of annular tensile members. A first and second carcass ply each extend between the annular tensile members. Each carcass ply has a central portion and two lateral edge portions. Each lateral edge portion is folded axially and radially outwardly around an annular tensile member. The cords of the central portion of the second carcass ply form an angle substantially equal to the angle formed by the cords of the first carcass ply with the equatorial plane but have an orientation with respect to the equatorial plane opposite to that of the central portion of the first carcass ply. A tread extends circumferentially around the carcass plies. The tread is designed with no belt reinforcement and with a single radius of curvature under normal inflation.

The tire of the present invention may be better understood in the context of the following definitions:
"Apex" means an elastomeric filler located radially above the bead core and between the plies and the turnup ply.
"Aspect ratio" of the tire means the ratio of its section height to its section width.
"Axial" and "axially" are used herein to refer to lines or directions that are parallel to the axis of rotation of the tire.
"Bead" means that part of the tire comprising an annular tensile member wrapped by ply cords and shaped, with or without other reinforcement elements such as flippers, chippers, apexes, toe guards and chafers, to fit the design rim.
"Bead Ratio" is the ratio between the inside (bead) diameter **I**_{**D**} and the outside (tread crown) diameter **O**_{**D**} of the tire.
"Belt Structure" or "Reinforcing Belts" means at least two annular layers or plies of parallel cords, woven or unwoven, underlying the tread, unanchored to the bead.
"Carcass" means the tire structure apart from the belt structure, tread, undertread, and sidewall rubber over the plies, but including the beads.
"Chafers" refers to narrow strips of material placed around the outside of the bead to protect cord plies from the rim, distribute flexing above the rim, and to seal the tire.
"Circumferential" means lines or directions extending along the perimeter of the surface of the annular tread perpendicular to the axial direction.
"Cord" means one of the reinforcement strands of which the plies in the tire are comprised.
"Cord Angle" means the acute angle, left or right in a plan view of the tire, formed by a cord with respect to the equatorial plane.
"Design radius" means the radius of the normally inflated tire which describes all of a portion of the tread's intended curvature in the axial direction, that is, in a plane passing through the axis of rotation of the tire. The design radius may differ from the actual, as-built tread radius due to production tolerances and other variances.
"Design inflation pressure" means the inflation pressure or range of inflation pressure recommended by the tire's manufacturer for operation of the tire on a vehicle.
"Equatorial plane" means the plane perpendicular to the tire's axis of rotation and passing through the center of its tread.
"Lateral" means an axial direction.
"Ply" means a continuous layer of rubber-coated parallel cords.
"Pneumatic tire" means a laminated mechanical device of generally toroidal shape (usually an open-torus) having beads and a tread and made of rubber, chemicals, fabric and steel or other materials. When mounted on the wheel of a motor vehicle, the tire through its tread provides traction and, by virtue of its ply cords that create a tensile structure, contains the fluid that sustains the vehicle load.
"Radial" and "radially" mean directions radially toward or away from the axis of rotation of the tire.
"Radial Ply Tire" means a belted or circumferentially-restricted pneumatic tire in which the ply cords which extend from bead to bead are laid at cord angles between 65 degrees and 90 degrees with respect to the equatorial plane of the tire.
"Section Height" means the radial distance from the nominal rim diameter to the outer diameter of the tire at its equatorial plane.
"Section Width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.
"Shoulder" means the upper portion of sidewall just below the tread edge, tread shoulder, or shoulder rib means that portion of the tread near the shoulder.
"Sidewall" means that portion of a tire between the tread and the bead.
"Tread" means that portion of the tire that comes into contact with the road under normal inflation and load.
"Tread width" means the arc length of the tread surface in the axial direction, that is, in a plane passing through the axis of rotation of the tire.

Thus, an object of the invention is to provide a low section height profile pneumatic tire for off-the-road vehicles.

Another object of the invention is to provide a low section height profile pneumatic tire having a bead ratio of greater than 0.55, and preferably between 0.55 to 0.70.

These and other objects, features, and advantages of the present invention will be more apparent upon reading the following specification in conjunction with the accompanying drawing figures.

**Fig. 1** is a full cross-section of a preferred embodiment of the present tire mounted on a rim.

**Fig. 2** is a radial cross-section of a preferred embodiment of the present tire.

**Fig. 3** is an enlarged sectional view of the bead area of the tire of **Fig. 2**.

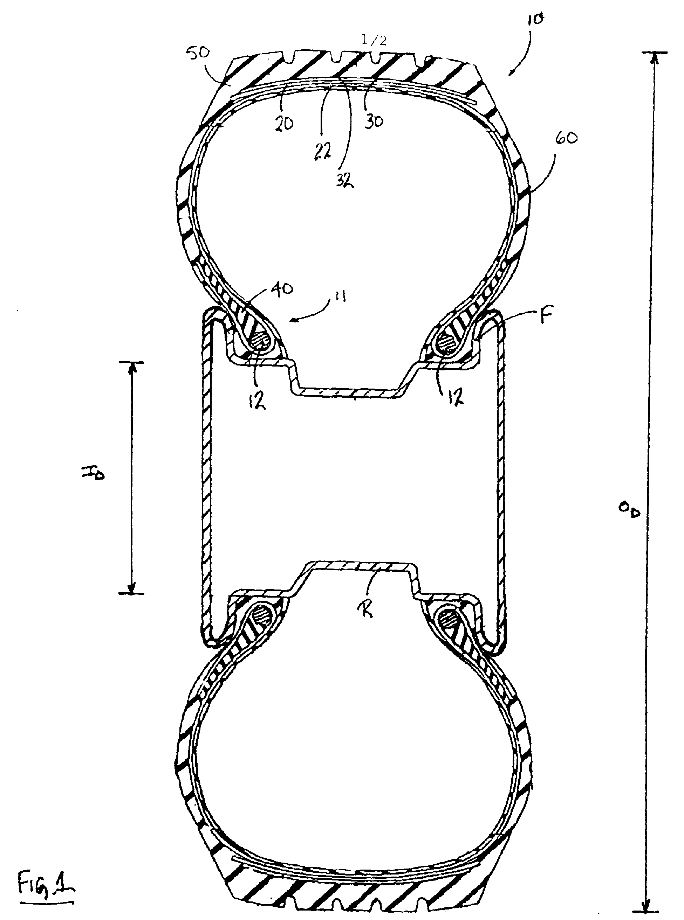

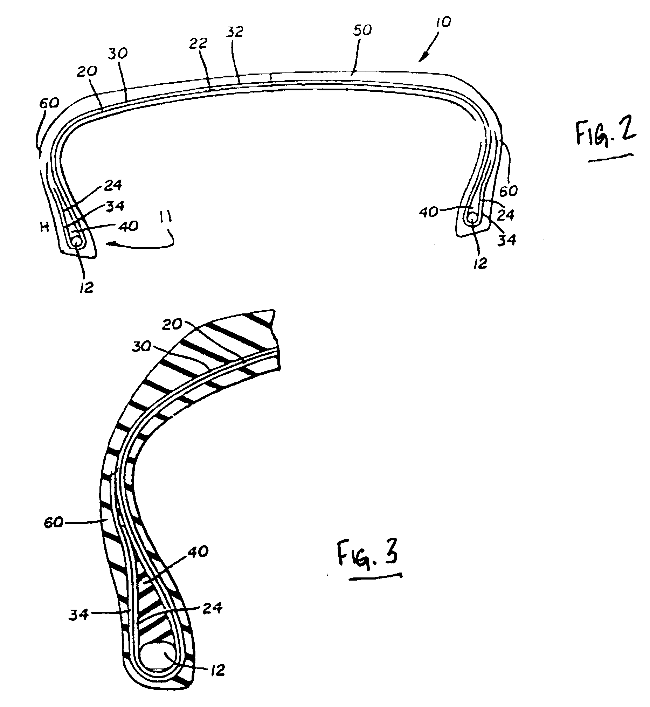

Referring now in detail to the drawing figures, wherein like reference numerals represent like parts throughout the several views, **Figs. 1-3** show the present pneumatic tire **10**. The present tire **10** comprises a pair of bead portions **11** having axially spaced apart annular tensile members **12**, first and second carcass plies **20**, **30**, and a tread **50**. A pair of sidewalls **60** extend between each annular tensile member **12** and the tread **50**. Further, the bead ratio of tire **10**, **I**_{**D**} **/O**_{**D**}**,** is greater than 0.55, and preferably in the range of between 0.55 and 0.70.

The tire **10** is shown mounted on a standard rim **R** and inflated with air to a standard internal pressure. The tire **10** is mounted on rim **R** by matching the bead portions **11** with the flanges **F** of the rim **R**. When the tire **10** is united with the wheel rim **R** and then inflated by applying a normal internal pressure, the carcass plies **20**, **30** becomes deformed in the area of the flanges **F** as shown in **Fig. 1**, which is balanced with the applied internal pressure.

Each of the first and second carcass plies **20**, **30** has a central portion **22**, **32** extending between the annular tensile members **12**. As seen in **Fig. 2**, each carcass ply also has lateral edge portions **24**, **34** which are folded axially and radially outwardly around an annular tensile member. The carcass plies are preferably reinforced with cords made of nylon, polyester, rayon and aromatic polyamide, although inorganic fiber cords such as metals can also be employed. Nylon is preferred because of its resistance to elongation at elevated temperatures, such as those associated with racing. The cords can form an angle between **5** degrees and **15** degrees with the tire's equatorial plane.

An apex strip **40** can be disposed between each annular tensile member **12** and the central portion **22, 32** and lateral edge portions **24, 34** of the second carcass ply **30.** In the preferred embodiment, an apex strip is used.

A tread **50** extends circumferentially around the carcass plies **20**, **30**. The tread can be grooved with an appropriate tread pattern if desired.

A tire according to the invention has demonstrated improved performance and superior characteristics for off-the-road applications with speeds under 50 mph. The high bead ratio of the present tire provides improved stability, increased load capacity, increased inside wheel envelope and reduced volume fill.

The beneficial performance of the tire of the present invention is not adversely affected by specific tire composition, hardness, resilience, aspect ratio, bias angle, gap ratios, tread thickness, modulus of elasticity, and other design characteristics. A tire incorporating the range of bead ratios disclosed herein incorporates the benefits of improved stability, increased load capacity, increased inside wheel envelope and reduced volume fill when compared to an identically designed tire having a conventional bead ratio of between 0.47 and 0.54.

In order to achieve a flat tread and the performance advantages associated therewith, tire designers sometime use a belt reinforcing structure disposed between the carcass plies **20**, **30** and the tread **50**. The belt reinforcing structure acts to restrain the tire during high speed operation and contributes to a flat tread. The belts are generally reinforced with cord and add to the cost of the tire. Tire failures often originate at the edges of such belts. In the preferred embodiment of a tire according to the invention, no belts are used.

While the invention has been disclosed in its preferred forms, it will be apparent to those skilled in the art that many modifications, additions, and deletions can be made therein without departing from the spirit and scope of the invention and its equivalents, as set forth in the following claims.

## Claims

1. In a pneumatic tire designed for use on paved road or dirt surfaces, the pneumatic tire having an inside diameter and an outside diameter, an improvement to the pneumatic tire comprising a ratio of the inside diameter to outside diameter of greater than 0.55 upon normal inflation of the pneumatic tire.

2. The improved pneumatic tire of Claim 1, the ratio of the inside diameter to outside diameter being in the range of between 0.55 - 0.74.

3. A pneumatic tire designed for use on paved road or dirt surfaces, the pneumatic tire having an inside diameter and an outside diameter, the tire comprising:
(a) a pair of annular tensile members;
(b) a first and a second carcass ply each extending between the annular tensile members, each carcass ply having a central portion and two lateral edge portions, each lateral edge portion being folded axially and radially outwardly around a respective annular tensile member; and
(c) a tread extending circumferentially around the carcass plies;
wherein upon normal inflation of the tire, the ratio of the inside diameter to outside diameter is greater than 0.55.

4. The tire of Claim 3, wherein the cords of the central portion of the second carcass ply form an angle in such range substantially equal to the angle formed by the cords of the first carcass ply with the equatorial plane, but have an orientation with respect to the equatorial plane opposite to that of the first carcass ply.

5. The tire of Claim 4, wherein the tread has a single radius of curvature under normal inflation.

6. A pneumatic tire designed for use on paved road or dirt surfaces, the tire having an inside and outside diameter, the tire comprising:
(a) a pair of annular tensile members;
(b) a first and a second carcass ply each extending between the annular tensile members, each carcass ply having a central portion and two lateral edge portions, each lateral edge portion being folded axially and radially outwardly around a respective annular tensile member; and
(c) a tread extending circumferentially around the carcass plies;
wherein upon normal inflation of the tire, the ratio of the inside diameter to outside diameter is in the range of between 0.55 - 0.74.

7. The tire of Claim 6, wherein the cords of the central portion of the second carcass ply form an angle in such range substantially equal to the angle formed by the cords of the first carcass ply with the equatorial plane, but have an orientation with respect to the equatorial plane opposite to that of the first carcass ply.

8. The tire of Claim 7, wherein the tread has a single radius of curvature under normal inflation.
